# EUROPEAN PATENT SPECIFICATION

(11) **EP 1 153 352 B1**
(45) Date of publication and mention of the grant of the patent: **27.08.2003**
(21) Application number: 00904776.2
(22) Date of filing: 18.02.2000
(51) Int. Cl.: G06F 17/24, G06F 17/60

(54) **METHOD OF HIDDEN TEXT DETECTION AND USE IN ELECTRONIC DOCUMENT APPROVAL**
VERFAHREN ZUM AUFSPÜREN VON VERSTECKTEM TEXT UND DESSEN VERWENDUNG BEI GENEHMIGUNG VON ELEKTRONISCHEN DOKUMENTEN
PROCEDE DE DETECTION DE TEXTE CACHE ET SON UTILISATION DANS L'APPROBATION DE DOCUMENTS ELECTRONIQUES

(30) Priority: 18.02.1999 US 120619 P
(43) Date of publication of application: 14.11.2001
(73) Proprietor: Silanis Technology Inc., St-Laurent, Quebec H4R 2N1 (CA)
(72) Inventor: PETROGIANNIS, Tommy, Montreal, Quebec H4B 2L4 (CA); NGUYEN, Bao, Ngoc, Montreal, Quebec H3N 2M8 (CA)
(74) Representative: Thévenet, Jean-Bruno
(86) International application number: CA0000170
(87) International publication number: WO00049521

(56) References cited:
- US-A- 5 850 219
- "Searching for Annotation in Documents on a Computer" RESEARCH DISCLOSURE, no. 318, October 1990 (1990-10), page 816 XP000148656 Emsworth, GB
- "OPTIONAL PRINTING OF COMMENT DATA" IBM TECHNICAL DISCLOSURE BULLETIN, vol. 27, no. 10a, March 1985 (1985-03), page 5864 XP000714833 Armonk, NY, US
- "METHOD TO PROVIDE SELECTIVE DISPLAY FOR ANNOTATED DATA" IBM TECHNICAL DISCLOSURE BULLETIN, vol. 28, no. 2, July 1985 (1985-07), page 826 XP000714970 Armonk, NY, US

## Description

### Field of the invention

The present invention is directed to a system and method of hidden text detection and use in electronic document approval.

### Background of the invention

Most organizations in the world exist in a hybrid state of electronic documents and paper documents. It is typical to see a document being created and revised electronically on computers. Then a paper hardcopy is generated and is circulated for approval. However, with the advent of computers and networks, more and more organizations are moving towards electronically approving documents. These electronic approval systems allow users to electronically sign the documents. Hardcopies can then be generated when required.

Presently, electronic documents do have one major drawback during the approval cycle. It is possible for someone to enter hidden text or image into a document. During a standard approval process, a user could read a document and then sign using an electronic signature package. If the user had not specifically checked for hidden text, the user could sign a document that contains text that is hidden and be unaware of it at the time of approval. Once approved, the hidden text or image could be then displayed or made visible. The approval will not be invalidated, since the hidden text or image was part of the document during approval. It would be very difficult to prove or argue this text or image was not visible at the time of approval.

Known in the art is the article entitled "Searching for Annotations in Documents on a Computer", RESEARCH DISCLOSURE, no. 318, October 1990 (1990-10), page 816, EMSWORTH, GB, which describes a method for searching for annotations in read-only documents.

More particularly, this article is directed to a method for the rapid reviewing of annotations in an electronic document. However, this method searches for annotations that are not an integral part of a document, but rather an external list linked to the document and stored in a different way than the inline text itself. Consequently, the described method can not search for invisible hidden text which is inline in an electronic document. Furthermore, this method is directed to read-only documents and, as a result, the method is not able to convert the found annotations into another type of information.

Consequently, there exists a need for a method and apparatus for hidden text detection during the approval process, so that any hidden text or images will be displayed, thereby insuring integrity of the signed/approved document.

### Summary of the invention

This invention provides for the detection of any hidden text or image in the electronic approval of the document and notification to the approver of the existence and content of the hidden text or image contained in the document. The invention will also optionally allow the users to take corrective actions during the approval process. These actions can be performed during, before or after the approval process and can be done as part of the approval system or other external system. In addition, this invention also discloses a method of using hidden texts in order to improve the electronic approval process.

The method in claimed, is appropriate for applications which permit the indication of hidden text. However, for applications which do not permit the indication of hidden text, the invention also provides an alternative method, where the presence of hidden text is determined by comparing the background color and the text color. If the background color and the text color are the same, the method of the present invention assumes that the text is hidden.

It is also possible that hidden text may be validly entered into a document at the time of signing, or at other times, but which does not otherwise affect the integrity of the document. This hidden text is thus delimited with delimiters, and the method of the present invention will ignore any hidden text delimited with delimiters, and will proceed as above for hidden text not delimited.

### Brief description of the drawings

The present invention and its advantages will be more easily understood after reading the following non-restrictive description of preferred embodiments thereof, made with reference to the following drawings in which:
Fig. 1a is a schematic representation of a hidden text detection routine for an application not supporting a hidden text query;
Fig. 1b is a schematic representation of a hidden text detection routing for an application supporting a hidden text query; and
Fig. 2 is a schematic representation of hidden text detection and use in electronic document approval.

### Description of a preferred embodiment of the invention

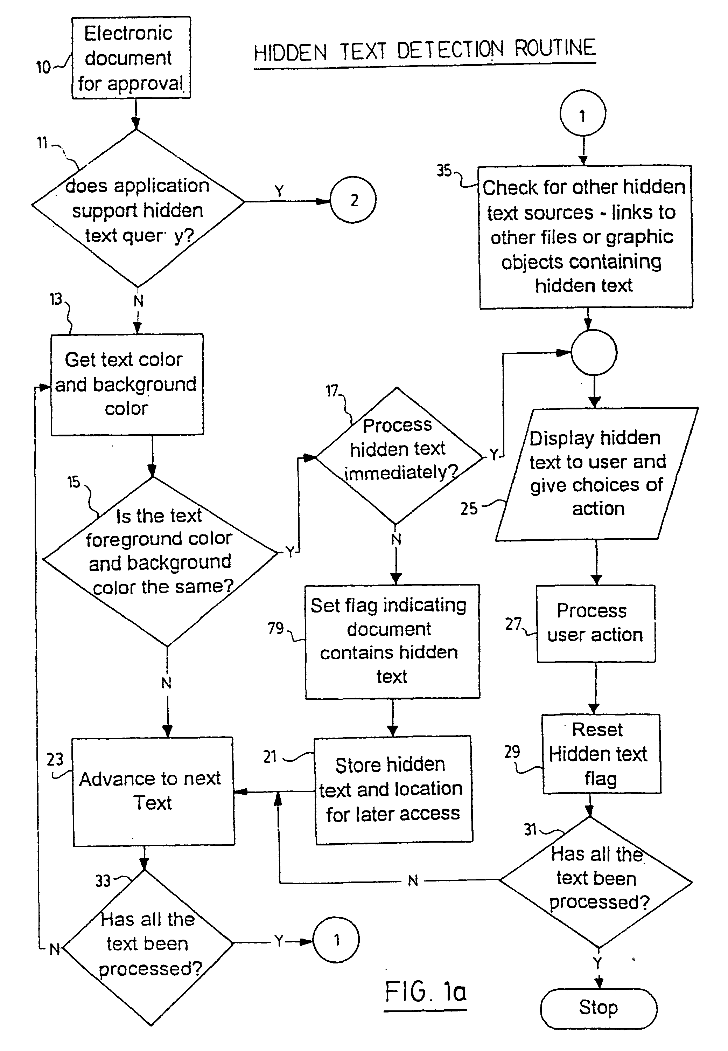

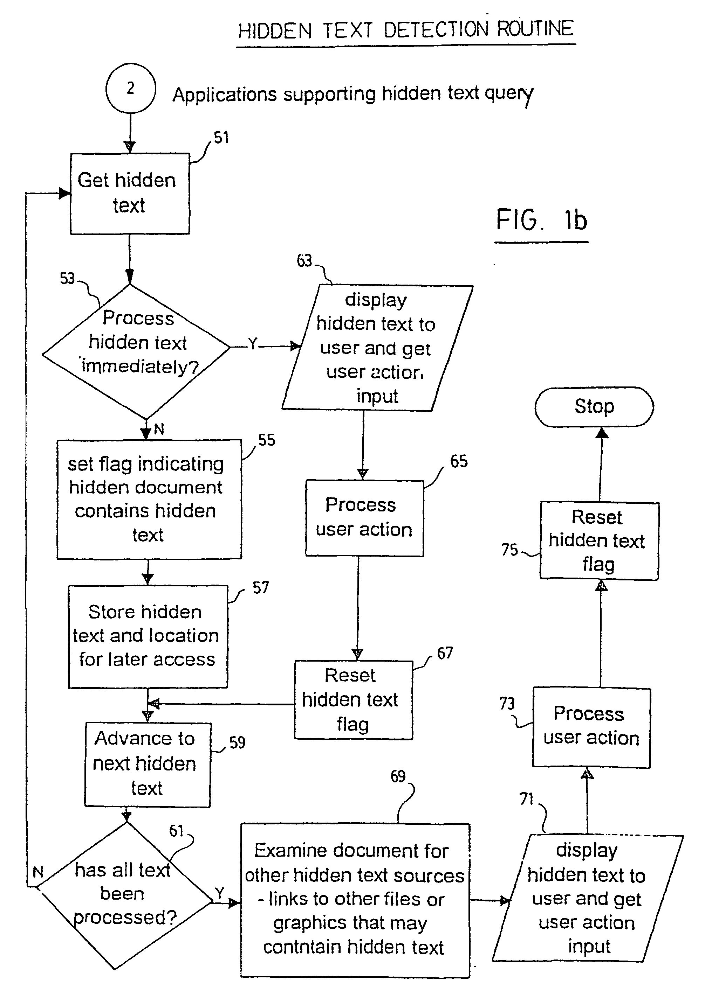

The invention is primarily concerned with a method for detecting hidden text in a document, as illustrated in Figs. 1a and 1b. The method is particularly useful within an electronic document approval process.

The method is applicable for applications, such as word processors, CAD packages, spreadsheet packages, etc., which permit hidden text to be located either through a hidden text query or some other methods. A hidden text query is a function of the application which automatically recognizes, one way or another, the presence of hidden text. However, for applications which do not permit a hidden text query, the invention provides for a variation, as will be explained hereinafter.

In broad terms, the method can be described as follows. When a document is submitted for approval, the approval program or an external program or macro examines the document to check if there is any hidden text contained in the document. There are numerous way of detecting hidden texts, the basic method being to compare the foreground color or the color of the text with the background color; if they are the same then the text is hidden or not visible. Another method is to check the application for attributes of the text, one of the attributes could indicate if the text is hidden or not. Additionally, embedded objects or external links can be checked to make sure there are no hidden texts available. Once the hidden texts in the document are discovered, the user is notified of the existence of the text and optionally the text can be displayed to the users. Optionally, the user can be given a choice as to how to deal with the hidden texts. Various choices can be presented to the user, such as: to delete the hidden text, to make the text visible, to ignore the text or to cancel the approval process, or a combination thereof. These choices and considerations can be made depending on the type of documents and circumstances surrounding the approval.

The method begins usually by launching the appropriate application, in this case an electronic approval process, and providing the electronic document 10. A query is made as to whether the application supports hidden text queries 11. Both alternatives will be described.

The method if the application does not support hidden text queries, illustrated in Fig. 1a, consists of determining the text color and background color 13, and comparing them to determine if they are the same 15. If the colors are the same, the method will determine if the hidden text is to be processed immediately 17, or if a flag is to be set indicating that hidden text is present in the document 19, and storing the hidden text and location for later access 21. This process is repeated until all of the text in the document has been processed 23.

If the hidden text is to be processed immediately, the user will see the hidden text 25 and be provided with a number of options. The user will enter the appropriate choice, the application will process the user action 27, the hidden text flag will be reset 29, and the process will repeat itself until all of the text has been processed 31.

Advantageously, once all the text in the document has been processed 33, the method can check for other hidden text sources 35, such as in links to other files, or graphic objects containing text.

The above routine is applicable to applications not supporting hidden text queries. For applications that do, reference is now made to Fig. 1b, which illustrates the main steps.

The application obtains the hidden text 51. A determination is made as to whether the hidden text should be processed immediately, or later 53. If the hidden text is not to be processed immediately, a flag is set indicating that hidden text is present 55, the hidden text and its location are stored for later access 57 and the next hidden text is processed 59, 61. If the hidden text is to be processed immediately, the hidden text is displayed 63 and user action is requested. The user enters the appropriate action 65 and the hidden text flag is reset 67.

Once all the hidden text has been examined, the document is examined for other hidden text sources 69, such as links to other files or graphics that may contain hidden text. At this point, a flag indicating the presence of hidden text is set. Although not illustrated in Fig. 1b, for each hidden text occurrence, the text is displayed 71, user action requested 71 and processed 73, and the hidden text flag is reset 75.

Hidden text in a document can be used for dynamic manifestation of data (DMD) during signing and also for targeting methods for automatic signature placements in documents. The dynamic manifestation of data is for data that is allowed to be entered during the time of signing. This could be information such as date, title, and the name of the signer etc. One way to indicate to an approval application is to place a text string with or without delimiters, so that the program knows what to replace during the approval. For example {DATE1} will be replaced with the date at the time first signature is entered. Similarly, {SIGNATURE1} could be used to target where the first signature should be placed in the document. The same technique can be used for each subsequent approval in a multiple signature scenario. In the hybrid document situation, a document might be approved electronically, then printed to paper to continue the approval cycle - in this case it would be necessary to have blank spaces for the appropriate data the person needs to fill out and sign on paper. These DMD Tokens should not be displayed. These tokens can be entered into the electronic document using hidden text and the approval software or macros can detect them and ignore them as being valid hidden text information. The detection method can be used if the users need to be notified about the existence of the DMD tokens as hidden text.

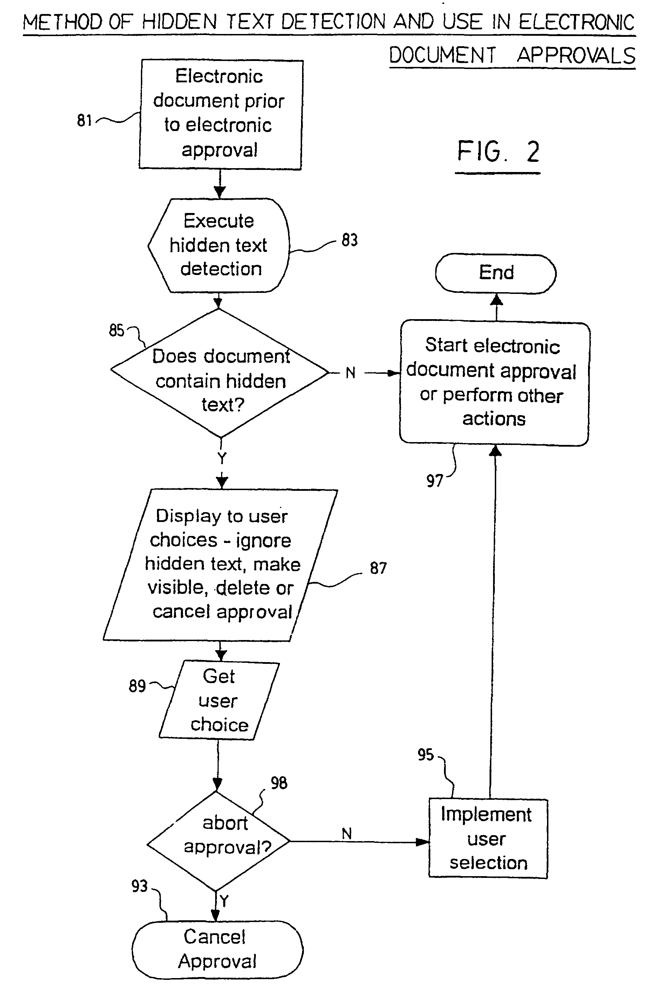

In broad terms, and as mentioned above, the present invention will perform the following steps within an electronic document approval process, as illustrated in Fig. 2. The electronic document will be provided 81. The detection of hidden text is performed 83, and a determination as to whether hidden text is contained in the document is done 85. If no hidden text is present, the normal electronic document approval proceeds 97.

However, if hidden text is present, the text is displayed to the user, and the appropriate action is performed 87, 89.

If the choice is to abort 91, the electronic approval process is aborted 93; otherwise, the user selection is implemented and the electronic approval process proceeds accordingly 95.

Although the present invention has been explained hereinabove by way of a preferred embodiment thereof, it should be pointed out that any modifications to this preferred embodiment within the scope of the appended claims is not deemed to alter or change the nature and scope of the present invention.

## Claims

1. In an electronic process for document approval, a method for detecting hidden text being an integral part of an electronic document in the document which is provided under a predetermined application on a system, the method comprising the steps of :
a) determining if the application provides hidden information which is invisible to the user, because it has the same foreground color as the background color or because it includes the presence of references or links to other files or objects; and
b) for each hidden information provided by the application, obtaining the hidden information contained in the document; determining the type of hidden information, the system automatically processing the hidden information based on the type.

2. A method according to claim 1, wherein said step b) further includes the sub-step of automatically removing the hidden information.

3. A method according to claim 1, wherein said step b) further includes the sub-step of automatically making hidden information visible.

4. A method according to claim 1, wherein said step b) further includes the sub-step of recording the hidden information and storing the hidden information for subsequent retrieval.

5. A method according to claim 1, wherein said step b) further includes determining that the type of hidden information requires user action; prompting a user for action upon retrieval of the hidden information and processing the user action.

6. A method according to claim 1, 2, 3 or 4, wherein said method further includes, after step b), the step c) of verifying the document for the presence of references or links to other files or objects, for each of the references or links to other files or objects, the step d) of determining if the references or links to other files or objects contain hidden information; and for each hidden information, the step e) of obtaining the hidden information, prompting a user for action upon retrieval of each hidden information and processing the user action.

7. A method according to claim 6, wherein said step b) further includes the step of setting a flag indicating that hidden text is present; and performing step b) for all of the document prior to proceeding with steps c) to e).

8. A method according to claim 1, wherein said step a) includes the steps of:
a1) sequentially obtaining the text colour and the background colour for the document;
a2) verifying if the text colour and the background colour are the same; and
a3) determining that the document contains hidden text for each instance where the text colour and background colour are the same.

9. A method according to claim 8, wherein said method further includes the step of verifying if the document contains links to other objects.

10. A method according to claim 9, wherein it further includes the step a4) comprising for each hidden text, obtaining the hidden text contained in the document, prompting a user for action upon retrieval of the hidden text, and processing the user action; and said step a4) further includes the step of automatically displaying the hidden text

11. A method according to claim 9, wherein it further includes the step a4) comprising for each hidden text, obtaining the hidden text contained in the document, prompting a user for action upon retrieval of the hidden text, and processing the user action; and said step a4) further includes the step of automatically deleting all hidden text.

12. A method according to claim 9, wherein it further includes the step a4) comprising for each hidden text, obtaining the hidden text contained in the document, prompting a user for action upon retrieval of the hidden text, and processing the user action; and said step a4) further includes the step of automatically recording the fact hidden text is present.

13. A method according to claim 1, wherein said electronic document further includes dynamic manifestation of data to place information into the document during the approval process, the dynamic manifestation of data being a replacement token delimited by delimiters which are turned into hidden text, and wherein said step b) further includes the steps of verifying if the hidden text is delimited by delimiters, ignoring the hidden text delimited by delimiters, prompting a user for action upon retrieval of the hidden information not delimited by delimiters; and processing the user action before automatically processing the hidden information based on the type and the user action.

14. A method according to claim 13, wherein said step a) includes the steps of :
a1) sequentially obtaining the text colour and the background colour for the document;
a2) verifying if the text colour and the background colour are the same; and
a3) determining that the document contains hidden text for each instance where the text colour and background colour are the same.

## Patentansprüche

1. Verfahren, in einem elektronischen Vorgang zur Dokumenten-Billigung, zum Detektieren von verstecktem Text, welcher ein integraler Teil eines elektronischen Dokumentes ist, in dem Dokument, welches unter einer vorbestimmten Anwendung auf einem System bereitgestellt ist, wobei das Verfahren die Schritte umfasst:
a) Bestimmen, ob die Anwendung versteckte Information bereitstellt, welche für den Anwender unsichtbar ist, weil sie die gleiche Vordergrundfarbe hat wie die Hintergrundfarbe, oder weil sie Referenzierungen oder Verknüpfungen zu anderen Dateien oder Objekten aufweist, und
b) Erhalten der in dem Dokument enthaltenen Information für jede durch die Anwendung bereitgestellte, versteckte Information; Bestimmen des Typs der versteckten Information, wobei das System die versteckte Information automatisch basierend auf dem Typ verarbeitet.

2. Verfahren nach Anspruch 1, wobei der Schritt b) ferner den Unterschritt des automatischen Entfernens der versteckten Information umfasst.

3. Verfahren nach Anspruch 1, wobei der Schritt b) ferner den Unterschritt des automatischen Sichtbarmachens der versteckten Information umfasst.

4. Verfahren nach Anspruch 1, wobei der Schritt b) ferner den Unterschritt des Aufzeichnens der versteckten Information und des Speicherns der versteckten Information zum späteren Auffinden umfasst.

5. Verfahren nach Anspruch 1, wobei der Schritt b) ferner eine Bestimmung umfasst, dass der Typ der versteckten Information eine Handlung des Anwenders erfordert; Auffordern eines Anwenders zu einer Handlung beim Auffinden der versteckten Information und Verarbeiten der Handlung des Anwenders.

6. Verfahren nach Anspruch 1, 2, 3 oder 4, wobei das Verfahren ferner umfasst:
nach dem Schritt b), den Schritt c) des Überprüfens des Dokumentes auf das Vorhandensein von Referenzierungen oder Verknüpfungen zu anderen Dateien oder Objekten,
für jede der Referenzierungen oder Verknüpfungen zu anderen Dateien oder Objekten,
den Schritt d) des Bestimmens, ob die Referenzierungen oder Verknüpfungen zu anderen Dateien oder Objekten versteckte Information enthalten, und
für jede versteckte Information, den Schritt e) des Erhaltens der versteckten Information, des Aufforderns eines Anwenders zu einer Handlung beim Auffinden der versteckten Information und des Verarbeitens der Handlung des Anwenders.

7. Verfahren nach Anspruch 6, wobei der Schritt b) ferner den Schritt des Setzens eines Kennzeichners umfasst, welcher angibt, dass versteckter Text vorhanden ist; und des Durchführens des Schrittes b) für das gesamte Dokument vor dem Fortfahren mit den Schritten c) bis e).

8. Verfahren nach Anspruch 1, wobei der Schritt a) die Schritte umfasst:
a1) sequentielles Erhalten der Textfarbe und der Hintergrundfarbe für das Dokument;
a2) Überprüfen, ob die Textfarbe und die Hintergrundfarbe gleich sind; und
a3) Bestimmen, dass das Dokument versteckten Text enthält für jeden Fall, bei dem die Textfarbe und die Hintergrundfarbe gleich sind.

9. Verfahren nach Anspruch B, wobei das Verfahren ferner den Schritt des Überprüfens, ob das Dokument Verknüpfungen zu anderen Objekten enthält, umfasst.

10. Verfahren nach Anspruch 9, wobei es ferner den Schritt a4) umfasst, welcher, für jeden versteckten Text, ein Erhalten des in dem Dokument enthaltenen versteckten Textes, ein Auffordern eines Anwenders zu einer Handlung beim Auffinden des versteckten Textes, und ein Verarbeiten der Handlung des Anwenders umfasst; und wobei der Schritt a4) ferner den Schritt des automatischen Anzeigens des versteckten Textes umfasst.

11. Verfahren nach Anspruch 9, wobei es ferner den Schritt a4) umfasst, welcher, für jeden versteckten Text, ein Erhalten des in dem Dokument enthaltenen versteckten Textes, ein Auffordern eines Anwenders zu einer Handlung beim Auffinden des versteckten Textes, und ein Verarbeiten der Handlung des Anwenders umfasst; und wobei der Schritt a4) ferner den Schritt des automatischen Löschens allen versteckten Textes umfasst.

12. Verfahren nach Anspruch 9, wobei es ferner den Schritt a4) umfasst, welcher, für jeden versteckten Text, ein Erhalten des in dem Dokument enthaltenen versteckten Textes, ein Auffordern eines Anwenders zu einer Handlung beim Auffinden des versteckten Textes, und ein Verarbeiten der Handlung des Anwenders umfasst; und wobei der Schritt a4) farner den Schritt des automatischen Aufzeichnens der Tatsache, dass versteckter Text vorhanden ist, umfasst.

13. Verfahren nach Anspruch 1, wobei das elektronische Dokument ferner eine dynamische Manifestierung von Daten umfasst, um Information in das Dokument während des Billigungsvorganges einzufügen, wobei die dynamische Manifestierung von Daten ein Ersetzungskennzeichen ist, welches durch Abgrenzer abgegrenzt ist welche in versteckten Text umgewandelt ist, und wobei der Schritt b) ferner die Schritte des Überprüfens, ob der versteckte Text durch Abgrenzer abgegrenzt ist, des Ignorierens des durch Abgrenzer abgegrenzten, versteckten Textes, des Aufforderns eines Anwenders zu einer Handlung beim Auffinden der versteckten Information, welche nicht durch Abgrenzer abgegrenzt ist; und des Verarbeitens der Handlung des Anwenders vor dem automatischen Verarbeiten der versteckten Information basierend auf dem Typ und der Handlung des Anwenders, umfasst.

14. Verfahren nach Anspruch 13, wobei der Schritt a) die Schritte umfasst;
a1) sequentielles Erhalten der Textfarbe und der Hintergrundfarbe für das Dokument;
a2) Überprüfen, ob die Textfarbe und die Hintergrundfarbe gleich sind; und
a3) Bestimmen, dass das Dokument versteckten Text enthält für jeden Fall, bei dem die Textfarbe und die Hintergrundfarbe gleich sind.

## Revendications

1. Procédé permettant, dans un processus électronique d'approbation de document, de détecter du texte caché faisant partie intégrante d'un document électronique dans le document qui est fourni dans le cadre d'une application prédéterminée sur un système, le procédé comprenant les opérations suivantes :
a) déterminer si l'application fournit une information cachée, qui est invisible à l'utilisateur parce qu'elle présente la même couleur pour le premier plan et pour l'arrière-plan ou parce qu'elle comporte la présence de références ou de liens avec d'autres fichiers ou objets ;
b) pour chaque information cachée fournie par l'application, obtenir l'information cachée qui est contenue dans le document; déterminer le type d'information cachée, le système traitant automatiquement l'information cachée sur la base du type.

2. Procédé selon la revendication 1, où ladite opération b) comporte en outre la sous-opération consistant à éliminer automatiquement l'information cachée.

3. Procédé selon la revendication 1, où ladite opération b) comporte en outre la sous-opération consistant à rendre automatiquement visible l'information cachée.

4. Procédé selon la revendication 1, où ladite opération b) comporte en outre la sous-opération consistant à enregistrer l'information cachée et à stocker l'information cachée en vue d'une extraction ultérieure.

5. Procédé selon la revendication 1, où ladite opération b) comporte en outre la détermination du fait que le type d'information cachée nécessite une action de l'utilisateur ; l'invite faite à l'utilisateur d'exercer une action au moment de l'extraction de l'information cachée ; et le traitement de l'action de l'utilisateur.

6. Procédé selon la revendication 1, 2, 3 ou 4, où ledit procédé comporte en outre, après l'opération b), l'opération c) qui consiste à vérifier, dans le document, la présence de références ou de liens à d'autres fichiers ou objets, puis, pour chacune des références ou liens à d'autres fichiers ou objets, l'opération d) qui consiste à déterminer si les références ou liens à d'autres fichiers ou objets contiennent une information cachée ; et, pour chaque information cachée, l'opération e) qui consiste à obtenir l'information cachée, à inviter l'utilisateur à exercer une action lors de l'extraction de chaque information cachée et à traiter l'action de l'utilisateur.

7. Procédé selon la revendication 6, où ladite opération b) comporte en outre l'opération qui consiste à positionner un drapeau indiquant que du texte caché est présent ; et à effectuer l'opération b) pour tout le document avant de passer aux opérations c) à e).

8. Procédé selon la revendication 1, où ladite opération a) comporte les opérations suivantes :
a1) obtenir séquentiellement la couleur du texte et la couleur du fond du document ;
a2) vérifier si la couleur du texte et la couleur du fond sont les mêmes ; et
a3) déterminer que le document contient du texte caché dans chaque cas où la couleur du texte et la couleur du fond sont les mêmes.

9. Procédé selon la revendication 8, où ledit procédé comporte en outre l'opération consistant à vérifier si le document contient des liens avec d'autres objets.

10. Procédé selon la revendication 9, où celui-ci comporte en outre l'opération a4) qui comprend, pour chaque texte caché, l'opération consistant à obtenir le texte caché contenu dans le document, à inviter l'utilisateur à exercer une action lors de l'extraction du texte caché, et à traiter l'action de l'utilisateur ; et ladite opération a4) comporte en outre l'opération consistant à afficher automatiquement le texte caché.

11. Procédé selon la revendication 9, où celui-ci comporte en outre l'opération a4) qui comprend, pour chaque texte caché, l'opération consistant à obtenir le texte caché contenu dans le document, à inviter l'utilisateur à exercer une action lors de l'extraction du texte caché, et à traiter l'action de l'utilisateur ; et ladite opération a4) comporte en outre l'opération consistant à supprimer automatiquement le texte caché.

12. Procédé selon la revendication 9, où celui-ci comporte en outre l'opération a4) qui comprend, pour chaque texte caché, l'opération consistant à obtenir le texte caché contenu dans le document, à inviter l'utilisateur à exercer une action lors de l'extraction du texte caché, et à traiter l'action de l'utilisateur; et ladite opération a4) comporte en outre l'opération consistant à enregistrer automatiquement le fait que du texte caché est présent.

13. Procédé selon la revendication 1, où ledit document électronique comporte en outre une manifestation dynamique de données visant à placer une information dans le document pendant le traitement d'approbation, la manifestation dynamique de données étant un jeton de remplacement délimité par des délimiteurs qui se transforment en du texte caché et où ladite opération b) comporte en outre les opérations consistant à vérifier si le texte caché est délimité par des délimiteurs, à ignorer le texte caché délimité par des délimiteurs, à inviter l'utilisateur à exercer une action lors de l'extraction de l'information cachée non délimitée par des délimiteurs ; et à traiter l'action de l'utilisateur avant de traiter automatiquement l'information cachée sur la base du type et de l'action de l'utilisateur.

14. Procédé selon la revendication 13, où ladite opération a) comporte les opérations suivantes :
a1) obtenir séquentiellement la couleur du texte et la couleur du fond du document ;
a2) vérifier si la couleur du texte et la couleur du fond sont les mêmes ; et
a3) déterminer que le document contient du texte caché dans chaque cas où la couleur du texte et la couleur du fond sont les mêmes.
